# EUROPÄISCHE PATENTSCHRIFT

(11) **EP 3 523 728 B1**
(45) Veröffentlichungstag und Bekanntmachung des Hinweises auf die Patenterteilung: **02.09.2020**
(21) Anmeldenummer: 17807720.2
(22) Anmeldetag: 08.11.2017
(51) Int. Cl.: G06F 13/42

(54) **BEFEHLS- UND MELDESYSTEM FÜR DIE AUTOMATISIERUNGSTECHNIK**
COMMAND AND REPORTING SYSTEM FOR AUTOMATION
SYSTÈME DE COMMANDE ET DE SIGNALEMENT POUR LA TECHNIQUE D'AUTOMATISATION

(30) Priorität: 30.11.2016 DE 102016223795
(43) Veröffentlichungstag der Anmeldung: 14.08.2019
(73) Patentinhaber: Siemens Aktiengesellschaft, 80333 München (DE)
(72) Erfinder: KREJSA, Zdenek, 26101 Pribram (CZ); MANDAT, Frantisek, 54101 Trutnov (CZ); STAUFER, Helmut, 92729 Weiherhammer (DE)
(86) Internationale Anmeldenummer: PCT/EP2017/078648
(87) Internationale Veröffentlichungsnummer: WO 2018/099705

(56) Entgegenhaltungen:
- EP-A1- 2 434 695
- EP-A2- 0 725 516
- WO-A1-2005/053236
- WO-A1-2009/006916
- DE-A1-102006 046 841

## Beschreibung

Die Erfindung betrifft ein Befehls- und Meldesystem für die Automatisierungstechnik. Ebenso betrifft die Erfindung ein Hauptmodul für ein solches Befehls- und Meldesystem. Die Erfindung betrifft auch ein Verfahren zum Versenden von Daten von einem Hauptmodul an Befehls- und Meldegeräte in einem entsprechende Befehls- und Meldesystem. Gleichermaßen betrifft die Erfindung ein Automatisierungssystem, das über ein entsprechendes Befehls- und Meldesystem verfügt.

Automatisierungssysteme weisen heute einen zunehmenden Funktionsumfang und damit eine steigende Komplexität auf. Dementsprechend steigt die Anzahl an Größen und Zuständen, die einem Benutzer anzuzeigen sind. Dem Benutzer steht zum manuellen Betrieb oder zur Einstellung eines Automatisierungssystems eine Vielzahl an Größen zur Verfügung, für die geeignete Eingabevorrichtungen vorzusehen sind. Im gleichen Maß, wie der Funktionsumfang eines Automatisierungssystems zunimmt, steigt auch die Schwierigkeit, solche Automatisierungssysteme fehlerfrei einzurichten. Es besteht ein Bedarf an einem System für Befehls- und Meldegeräte, die dem Benutzer Informationen anzeigen und Benutzerbefehle entgegennehmen, das einfach, schnell und sicher vor Fehlern aufzubauen und einzurichten ist.

Aus der Druckschrift WO 2009/006916 A1 ist ein System zur Steuerung von busvernetzten Geräten über einen offenen Feldbus bekannt, das einen Gateway aufweist, der mit einer Vielzahl an Busteilnehmern verbunden ist. Die Verbindung erfolgt dabei über einen LIN-Bus, in dem jedem Busteilnehmer eine Kennnummer zugeordnet ist.

Nachteilig an den Lösungen aus dem Stand der Technik ist unter anderem, dass die Verwaltung der Kennnummern Rechenkapazitäten erfordert. Ferner weisen die bekannten Systeme nur ein relativ schmales Einsatzspektrum auf. Es besteht Bedarf an einem einfachen, fehlersicheren, kostengünstigen Befehls- und Meldegerätesystem, das ein hohes Maß an Vielseitigkeit bietet.

Die skizzierte Aufgabenstellung wird durch das erfindungsgemäße Hauptmodul gelöst, das die technische Basis für ein entsprechendes Befehls- und Meldesystem für die Automatisierungstechnik bildet. Das Hauptmodul weist eine Steuereinheit auf, die dazu ausgebildet ist, über angeschlossene Eingänge Daten und Befehle zu empfangen und auszuwerten und zu verarbeiten. Die Steuereinheit ist auch dazu ausgebildet, nach einer solchen Verarbeitung Daten und Befehle über angeschlossene Ausgänge auszugeben. Zu den mit der Steuereinheit verbundenen Eingängen gehört auch eine Geräteschnittstelle, die dazu eingerichtet ist, das Hauptmodul mit einer Mehrzahl an Befehls- und Meldegeräten zu verbinden. Dazu ist ein erstes Befehls- und Meldegerät unmittelbar an der Geräteschnittstelle angeschlossen. Ein zweites Befehls- und Meldegerät ist mit dem ersten Befehls- und Meldegerät verbunden, so dass eine indirekte Verbindung mit der Steuereinheit des Hauptmoduls vorliegt. Das zweite Befehls- und Meldegerät kann gleichermaßen mit weiteren Befehls- und Meldegeräten verbunden sein. Hierdurch wird eine Linientopologie verwirklicht. Die Steuereinheit ist auch mit einer Bus-Schnittstelle verbunden, durch die eine Verbindung mit einer übergeordneten Steuereinheit, beispielsweise einer Speicherprogrammierbaren Steuerung, kurz SPS, herstellbar ist. Das Hauptmodul kann auch dazu ausgebildet sein, die Funktionen eines Befehls- und Meldegeräts zu erfüllen.

Die Steuereinheit ist dazu ausgebildet, über die Geräteschnittstelle die mindestens zwei Befehls- und Meldegeräte separat, also individuell, anzusteuern. Das Ansteuern erfolgt dabei über ein Befehlssignal, das von der Steuereinheit über die Geräteschnittstelle an wenigstens eines der mindestens zwei Befehls- und Meldegeräte gesendet wird. Erfindungsgemäß weist das Befehlssignal mehrere Zellen auf, die dazu ausgebildet sind, einzeln oder im Verbund mit benachbarten Zellen Informationen zu transportieren. Die Funktion einer Zelle innerhalb eines Befehlssignals ist durch ein Format des Befehlssignals definiert. Erfindungsgemäß weist das Befehlssignal eine Zielzelle auf, die durch die Steuereinheit mit einem Wert, der als Zielangabe für das Befehlssignal dient, beschreibbar ist. Der Wert in der Zielzelle definiert das Befehls- und Meldegerät, für das das Befehlssignal bestimmt ist, dabei über dessen Kettenposition in der Linientopologie. Dies entspricht im Wesentlichen einem Abzählen der Befehls- und Meldegeräte ab dem Hauptmodul. Das Befehlssignal umfasst auch eine Zählzelle, die beim Absenden des Befehlssignals von der Geräteschnittstelle mit einem Initialwert gefüllt ist. Die Zählzelle ist derart ausgebildet, dass der darin gespeicherte Wert durch ein Befehls- und Meldegerät überschreibbar ist. Die Befehls- und Meldegeräte sind dazu ausgebildet, beim Empfangen des Befehlssignals den Wert der Zielzelle und der Zählzelle auszulesen und zu vergleichen. Wenn die Werte in der Zielzelle und der Zählzelle voneinander abweichen, sind die Befehls- und Meldegeräte dazu ausgebildet, den Wert der Zählzelle zu inkrementieren, also um ein Inkrement zu erhöhen. Hierdurch wird ein Befehlssignal ausgehend vom Hauptmodul von einem Befehls- und Meldegerät ans nächste weitergereicht bis das Befehlssignal vom bestimmungsgemäßen Empfänger identifiziert und empfangen wird. Eine derartige Zielzelle wird durch die Steuereinheit im Hauptmodul durch eine geeignete Formatierung des Befehlssignals bereitgestellt. Infolgedessen ist eine eigenständige Adressierung der Befehls- und Meldegeräte entbehrlich, so dass eine geräteadressfreie Zustellung verwirklicht wird.

Das erfindungsgemäße Hauptmodul erlaubt damit einen einfachen Aufbau eines Befehls- und Meldesystems, in dem eine aufwändige Adressraumverwaltung für die Befehls- und Meldegeräte entfällt. Die Linientopologie ist auch später in einfacher Weise mit zusätzlichen Befehls- und Meldegeräten ausbaubar. Es sinkt nicht nur der Arbeitsaufwand beim Einrichten eines Automatisierungssystems, sondern auch die Fehlerwahrscheinlichkeit beim Einrichten des Automatisierungssystems. Es wird auch der Bedarf an Rechenleistung für den Betrieb der Befehls- und Meldegeräte reduziert. Demnach ist das erfindungsgemäße Hauptmodul mit kosteneffizienter Hardware herstellbar. Alternativ oder ergänzend kann die reduzierte Anforderung in puncto Rechenleistung genutzt werden, um dadurch freigewordene Rechenkapazität zum Betrieb weitergehender Anschlüsse zu nutzen. Dadurch, dass die Befehls- und Meldegeräte durch das erfindungsgemäße Hauptmodul geräteadressfrei ausgebildet sein können, besteht kein Bedarf an ausfallsicheren Speichern für Geräteadressen. Ebenso sind aufwändige Neukonfigurationsverfahren entbehrlich, die beispielsweise nach einem Reset oder Austausch eines bekannten Befehls- und Meldegeräts notwendig sind. Gleichermaßen erfordert ein Ausbau oder eine Erweiterung eines zugehörigen Befehls- und Meldesystems kein aufwendiges Umadressieren der Befehls- und Meldegeräte bzw. des Hauptmoduls. Ferner können Befehls- und Meldegeräte durch das erfindungsgemäße Hauptmodul einfacher konstruiert sein und kosteneffizienter hergestellt werden.

In einer bevorzugten Ausführungsform der Erfindung ist die Geräteschnittstelle als serielle Schnittstelle ausgebildet. Eine serielle Schnittstelle weist ein hohes Maß an Robustheit auf und erlaubt eine einfache Kommunikation zwischen den Befehls- und Meldegeräten und dem Hauptmodul. Alternativ oder ergänzend ist die Geräteschnittstelle dazu ausgebildet, auch Daten von mindestens einem Befehls- und Meldegerät an das Hauptmodul zu übertragen.

Weiter bevorzugt weist das erfindungsgemäße Hauptmodul mindestens einen Digitaleingang auf. Zusätzlich oder alternativ weist das erfindungsgemäße Hauptmodul mindestens einen Analogeingang auf. Zusätzliche Analog- oder Digitaleingänge erlauben es, zusätzliche Eingabegeräte mit dem Hauptmodul zu verbinden, die eine erhöhte Komplexität aufweisen. Beispielsweise kann durch eine Verbindung von vier Digitaleingängen ein Vier-Wege-Schalter bzw. Joystick als Eingabegerät mit dem Hauptmodul gekoppelt werden oder an den Analogeingang kann ein analoges Eingabegerät, wie zum Beispiel ein Potentiometer, angeschlossen werden. Das erfindungsgemäße Hauptmodul verfügt infolge der Einfachheit der Ansteuerung der Befehls- und Meldegeräte über freie Rechenkapazität, die für den Betrieb der zusätzlichen komplexeren Eingabegeräte genutzt werden kann. Infolgedessen können solche Eingabegeräte auf einer niedrigen Hierarchieebene in ein bestehendes Automatisierungssystem eingebunden werden. Damit ist eine aufwändige Anpassung der Konfiguration auf höheren Hierarchieebenen des Automatisierungssystems, beispielsweise auf der Ebene der SPS, entbehrlich. Insgesamt wird so die Vielseitigkeit des erfindungsgemäßen Hauptmoduls weiter erhöht.

Ferner kann das erfindungsgemäße Hauptmodul mit mindestens einem Digitalausgang versehen sein. Alternativ oder ergänzend kann das Hauptmodul auch mit mindestens einem Analogausgang ausgestattet sein. Damit können zusätzliche Ausgabegeräte, beispielsweise eine mehrstufige Meldesäule, mit einem entsprechenden Hauptmodul verbunden werden. Auch hierdurch wird die Vielseitigkeit des Hauptmoduls, und damit eines Befehls- und Meldesystems, weiter gesteigert.

Des Weiteren kann das erfindungsgemäße Hauptmodul einen Sicherheits-Signaleingang aufweisen, über den ein sicherheitsgerichtetes Gerät anschließbar ist. Unter einem Sicherheits-Signaleingang ist ein Signaleingang zu verstehen, der für sicherheitsgerichtete Anwendungen, beispielweise einen Not-Aus, geeignet und qualifiziert ist. Die Steuereinheit im erfindungsgemäßen Hauptmodul ist dazu geeignet, die Signale vom Sicherheits-Signaleingang zu empfangen und auszuwerten. Die Steuereinheit ist dazu ausgebildet, die Signale vom Sicherheits-Signaleingang separat von den weiteren Signalen, beispielsweise einer Kommunikation über die Geräteschnittstelle, die Digital- oder Analogausgänge zu verarbeiten und so ein hohes Maß an Sicherheit zu gewährleisten. Dies erfolgt durch einen modularen Aufbau der Steuereinheit.

In einer weiter bevorzugten Ausführungsform der Erfindung ist das Befehlssignal dazu ausgebildet, mindestens einen Parameter separat an mindestens eines der Befehls- und Meldegeräte zu übertragen. Das Befehlssignal weist hierzu mindestens eine Parameterzelle auf, in der ein solcher Parameter, der das Verhalten des Befehls- und Meldegeräts bestimmt, speicherbar. Wenn das Befehls- und Meldegerät beispielsweise als Leuchtelement oder Leuchtknopf ausgebildet ist, können zum Beispiel die Leuchtstärke oder die Blinkfrequenz Parameter sein, die über das Befehlssignal transportiert werden. Wenn das Befehls- und Meldegerät beispielsweise eine LED umfasst, kann auch die Farbe einer Leuchtanzeige des Befehls- und Meldegeräts eingestellt werden. Als Parameter können sämtliche Größen gewählt werden, die zur gerätespezifischen Einstellung eines Befehls- und Meldegeräts geeignet sind. Eine derartige Parametrierung wird durch das erfindungsgemäße Hauptmodul auf eine relativ niedrige Hierarchieebene des einzurichtenden Automatisierungssystems übertragen. Infolgedessen werden übergeordnete Ebenen, beispielsweise die übergeordnete Steuereinheit wie einer SPS, von diesen Aufgaben freigehalten, was die Komplexität beim Einrichten der übergeordneten Steuereinheit reduziert und somit das Auftreten von Fehlern verhindert. Gleichzeitig steht ein hohes Maß an Individualisierbarkeit beim Einrichten des Automatisierungssystems mit dem erfindungsgemäßen Hauptmodul zur Verfügung.

Ferner kann die Steuereinheit im erfindungsgemäßen Hauptmodul mit einem Anschluss für ein wechselbares Speichermodul verbunden sein. Das Speichermodul kann beispielsweise als USB-Speicher oder als EEPROM-Speicher ausgebildet sein. Die Verbindung zwischen dem Anschluss für das wechselbare Speichermodul und der Steuereinheit ist dabei dazu ausgebildet, eine Übertragung von Parametern vom Speichermodul zur Steuereinheit zu erlauben, die fehlersicher ist. Ein Fehler kann dabei eine Änderung eines Bits in den übertragenen Parametern sein. Hierdurch wird die Einrichtung des Automatisierungssystems, das mit dem erfindungsgemäßen Hauptmodul ausgestattet ist, weiter vereinfacht. Darüber hinaus kann bei einem Austausch des sicherheitsgerichteten Geräts die Konfiguration und/oder Parametrierung sofort wieder aus dem wechselbaren Speichermodul eingelesen werden. Hierdurch werden aufwändige Neukonfigurationen bzw. Neuparametrierungen vermieden und Ausfallzeiten des Automatisierungssystems verringert. Dies steigert die Wirtschaftlichkeit des Automatisierungssystems.

Die zugrundeliegende Aufgabenstellung wird auch durch das erfindungsgemäße Verfahren zum Versenden eines Befehlssignals gelöst. Das Befehlssignal wird von einer Steuereinheit eines Hauptmoduls erzeugt, das mit mindestens zwei Befehls- und Meldegeräten verbunden ist. Dabei ist das Hauptmodul mit einem ersten Befehls- und Meldegerät über eine Geräteschnittstelle unmittelbar verbunden. Das erste Befehls- und Meldegerät ist wiederum mit einem zweiten Befehls- und Meldegerät gekoppelt. Somit wird eine Linientopologie ausgebildet. Das Befehlssignal ist im erfindungsgemäßen Verfahren an ein einzelnes Zielgerät zu senden, das ein ausgewähltes Befehls- und Meldegerät ist. In einem ersten Verfahrensschritt wird das Befehlssignal von der Steuereinheit des Hauptmoduls zum Versenden bereitgestellt. Dazu wird das Befehlssignal von der Steuereinheit erzeugt und/oder von einer übergeordneten Steuereinheit erzeugt und zum Hauptmodul gesendet. Ein Befehlssignal, das von der übergeordneten Steuereinheit erzeugt wird, ist auch durch das Hauptmodul modifizierbar. Das Befehlssignal umfasst eine Zielzelle, in der ein Wert gespeichert ist, durch den ein Zielgerät festlegbar ist. Der Wert in der Zielzelle ist während des Versendens unveränderlich. Der Wert in der Zielzelle entspricht einer Kettenposition des Zielgeräts in der Linientopologie, also im Wesentlichen dem Ergebnis eines Abzählens der Befehls- und Meldegeräte ausgehend vom Hauptmodul aus. Das Befehlssignal umfasst auch eine Zählzelle, die durch die Befehls- und Meldegeräte in der Linientopologie veränderbar ist.

In einem weiteren Verfahrensschritt wird für die Zielzelle ein Wert eingestellt, der mit dem gewünschten Zielgerät korrespondiert. Die Auswahl des Zielgeräts erfolgt beispielsweise durch eine Benutzereingabe oder durch Informationen oder Befehle von einer übergeordneten Steuereinheit, insbesondere einer SPS. Des Weiteren wird in die Zählzelle ein Initialwert geschrieben. Der Initialwert ist derart gewählt, dass er der Kettenposition des Befehls- und Meldegeräts entspricht, das unmittelbar über die Geräteschnittstelle mit dem Hauptmodul verbunden ist.

Während eines weiteren Verfahrensschrittes wird das Befehlssignal an das unmittelbar mit dem Hauptmodul verbundene Befehls- und Meldegerät gesendet. In einem anschließenden Verfahrensschritt wird das Befehlssignal empfangen und vom Befehls- und Meldegerät geprüft, ob die Werte in der Zielzelle mit der Zählzelle übereinstimmen. Wenn die Werte der Zielzelle und der Zählzelle voneinander abweichen, wird der Zählerwert inkrementiert, also um ein festes Inkrement erhöht. Das Inkrement ist beispielsweise eine natürliche Zahl, insbesondere Eins. Anschließend wird das Befehlssignal an ein benachbartes Befehls- und Meldegerät weitergesendet. Das Weitersenden erfolgt entlang der Linientopologie in eine Richtung, die vom Hauptmodul wegführt.

Wenn beim Prüfen durch das Befehls- und Meldegerät erkannt wird, dass der Wert der Zählzelle mit dem Wert der Zielzelle übereinstimmt, wird so erkannt, dass das Befehls- und Meldegerät, das den Prüfschritt durchführt, selbst das Zielgerät ist. Das Befehlssignal wird in diesem Fall durch das Zielgerät empfangen und als Befehl verarbeitet, also umgesetzt.

Das Verfahren erlaubt es, schnell und zuverlässig ein Befehlssignal gezielt einem einzelnen Befehls- und Meldegerät zuzustellen, ohne dass hierzu eine Speicherung von Adressen in den Befehls- und Meldegeräten erforderlich ist. Infolgedessen können die Befehls- und Meldegeräte einfach und kosteneffizient konstruiert werden. Das erfindungsgemäße Verfahren stellt geringe Anforderungen in puncto Rechenleistung. Die so im Hauptmodul eingesparte Rechenleistung kann damit für die Implementierung zusätzlicher Funktionen genutzt werden. Dadurch wird insgesamt die Vielseitigkeit eines Automatisierungssystems, das das erfindungsgemäße Verfahren nutzt, gesteigert.

Die skizzierte Aufgabenstellung wird auch durch ein Computerprogrammprodukt gelöst, das in einer Steuereinheit eines erfindungsgemäßen Hauptmoduls ausführbar ist. Das Computerprogrammprodukt wird im Hauptmodul in einem entsprechend ausgelegten Speicher gespeichert. Das Hauptmodul ist mit einer Mehrzahl an Befehls- und Meldegeräten in einer Linientopologie verbunden. Erfindungsgemäß ist das Computerprogrammprodukt dazu ausgebildet, mindestens eines der oben beschriebenen Verfahren zum Versenden eines Befehlssignals vom Hauptmodul an ein einzelnes Befehls- und Meldegerät durchzuführen. Alternativ kann das Computerprogrammprodukt in Form einer festen Verdrahtung, z.B. in einem ASIC, gespeichert sein.

Des Weiteren wird die Aufgabenstellung durch ein erfindungsgemäßes Befehls- und Meldesystem gelöst, das eine Mehrzahl an Befehls- und Meldegeräten aufweist, die in einer Linientopologie miteinander verbunden sind. Das Befehls- und Meldesystem umfasst auch ein Hauptmodul, das an einem Ende der Linientopologie mit der Mehrzahl an Befehls- und Meldegeräten gekoppelt ist. Das Hauptmodul ist dabei gemäß einer der oben beschriebenen Ausführungsformen ausgebildet.

Die Aufgabenstellung wird auch durch ein Automatisierungssystem gelöst, das eine übergeordnete Steuereinheit aufweist. Die übergeordnete Steuereinheit ist beispielsweise als SPS ausgebildet. Die übergeordnete Steuereinheit ist mit einem Befehls- und Meldesystem gekoppelt, das eine Mehrzahl an Befehls- und Meldegeräten umfasst, die mit einem Hauptmodul verbunden sind. Das Befehls- und Meldesystem ist dabei gemäß einer der oben skizzierten Ausführungsformen ausgebildet.

Die Erfindung wird im Folgenden anhand der Ausführungsformen in den Figuren 1 bis 4 näher erläutert. Die Merkmale der einzelnen Ausführungsformen sind dabei untereinander kombinierbar. Es zeigen im Einzelnen:
- FIG 1: eine schematische Darstellung eines Befehls- und Meldesystems gemäß einer Ausführungsform der Erfindung;
- FIG 2: einen schematischen Aufbau eines Befehlssignals gemäß einer Ausführungsform der Erfindung;
- FIG 3: eine schematische Darstellung des Ablaufs eines erfindungsgemäßen Verfahrens in einem Befehls- und Meldesystem;
- FIG 4: eine Ablaufdiagramm einer Ausführungsform des erfindungsgemäßen Verfahrens.

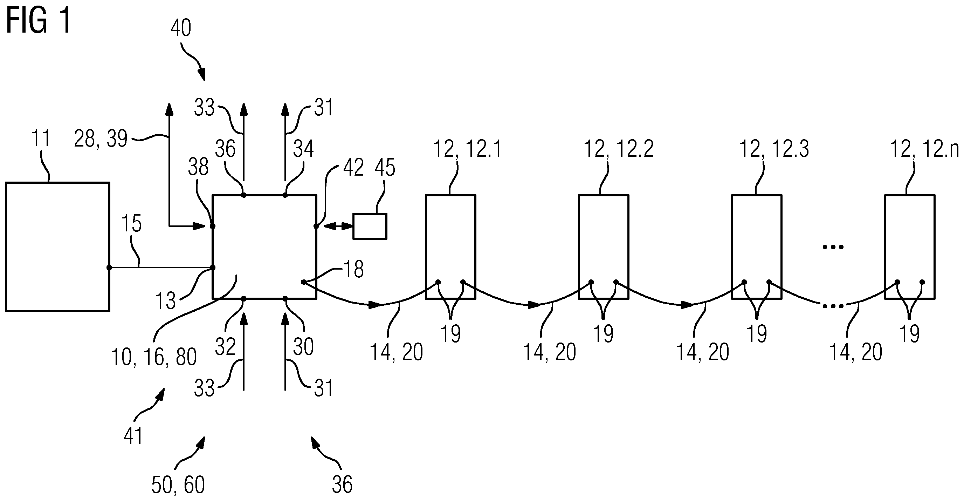

In FIG 1 ist schematisch ein Befehls- und Meldesystem 50 gemäß einer Ausführungsform der Erfindung dargestellt. Das Befehls- und Meldesystem 50 umfasst ein Hauptmodul 10, das über eine Steuereinheit 16 verfügt. Die Steuereinheit 16, und damit das Hauptmodul 10, ist mit einer Mehrzahl an Befehls- und Meldegeräten 12, 12.1, 12.2, 12.3, 12.n verbunden, die eine Linientopologie ausbilden. Dabei weist ein erstes Befehls- und Meldegerät 12.1 einen Linienanschluss 19 auf, der über eine Geräteleitung 14 mit einer Geräteschnittstelle 18 des Hauptmoduls 10 gekoppelt ist. Über einen weiteren Linienanschluss 19 ist das erste Befehls- und Meldegerät 12.1 mit einem benachbarten zweiten Meldegerät 12.2 über Linienanschlüsse 19 und eine Geräteleitung 14 verbunden. Die so realisierte Verkettung wird analog über bis zu letzten Befehls- und Meldegerät 12.n fortgesetzt. Die Steuereinheit 16 des Hauptmoduls 10 ist dazu ausgebildet, ein Befehlssignal 20 zu erzeugen, das über die Geräteschnittstelle 18 ausgegeben wird. Das Befehlssignal 20 ist über die Geräteleitungen 14 bis zum letzten Befehls- und Meldegerät 12.n in der Linientopologie transportierbar. Das Hauptmodul 10 verfügt auch über einen Busanschluss 13, an dem eine Busleitung 15 angeschlossen ist.

Die Busleitung 15 stellt eine bidirektional kommunikative Verbindung zwischen dem Hauptmodul 10 und einer übergeordneten Steuereinheit 11 her. Die übergeordnete Steuereinheit 11 ist in FIG. 1 als Speicherprogrammierbare Steuerung, kurz SPS, ausgebildet. Durch die Busleitung 15 und den Busanschluss 13 ist das Hauptmodul 10 dazu geeignet, Befehle von der übergeordneten Steuereinheit 11 zu empfangen und/oder Daten an die übergeordnete Steuereinheit von den Befehls- und Meldegeräten 12, 12.1, 12.2, 12.3, 12.n zu senden.

Das Hauptmodul 10 verfügt auch über einen Sicherheits-Signaleingang 38, der dazu ausgebildet ist, sicherheitsbezogene Signale 39 von mindestens einem nicht näher dargestellten sicherheitsgerichteten Gerät 40 zu empfangen. Unter einem sicherheitsgerichteten Gerät sind dabei Vorrichtungen wie Not-Aus-Vorrichtungen, zu verstehen. Der Sicherheits-Signaleingang 38 ist auch dazu ausgebildet, Parameter 28 an das mindestens eine sicherheitsgerichtete Gerät zu senden. Das Hauptmodul 10 ist auch mit einem Digitaleingang 30 versehen, über den nicht näher dargestellte digitale Zusatzgeräte 36 anschließbar sind. Die digitalen Zusatzgeräte 36 senden digitale Eingangssignale 31 an das Hauptmodul 10. In gleicher Weise verfügt das Hauptmodul 10 über einen Analoganschluss 32, der zum Empfangen von analogen Eingangssignalen 33 ausgebildet ist, die von nicht näher dargestellten analogen Zusatzgeräten 41 stammen. Gleichermaßen verfügt das Hauptmodul 10 über einen Digitalausgang 34 und einen Analogausgang 36. Über den Digitalausgang 34 und den Analogausgang 36 werden digitale bzw. analoge Ausgangssignale 31, 33 jeweils an das mindestens eine nicht näher dargestellte digitale bzw. analoge Zusatzgerät 36, 41 gesendet.

Ferner weist das Hauptmodul 10 einen Speicheranschluss 42 auf, der zur lösbaren Aufnahme eines wechselbaren Speichermoduls 45 ausgebildet ist. Das Speichermodul 45 ist dazu ausgebildet, Konfigurations- und Parametrierungsdaten für das Hauptmodul 10 und die damit gekoppelten Geräte 12, 36, 40, 41 zu speichern und an die Steuereinheit 16 zu übertragen. Zwischen dem Speicheranschluss 42 und der Steuereinheit 16 besteht eine Kommunikationsverbindung, die sicher gegen Datenverlust und nicht bestimmungsgemäße Datenveränderung ist. Unter einer nicht bestimmungsgemäßen Datenveränderung ist beispielsweise das so genannte "Umfallen" eines Bits, also dessen Wertumkehr, oder ein nicht genehmigter Schreibzugriff zu verstehen. Das Befehls- und Meldesystem 50 gemäß FIG 1 gehört zu einem nicht näher dargestellten Automatisierungssystem 60.

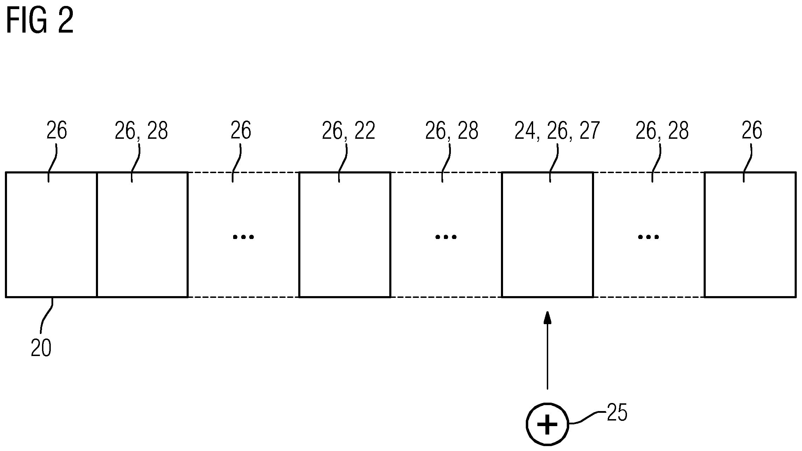

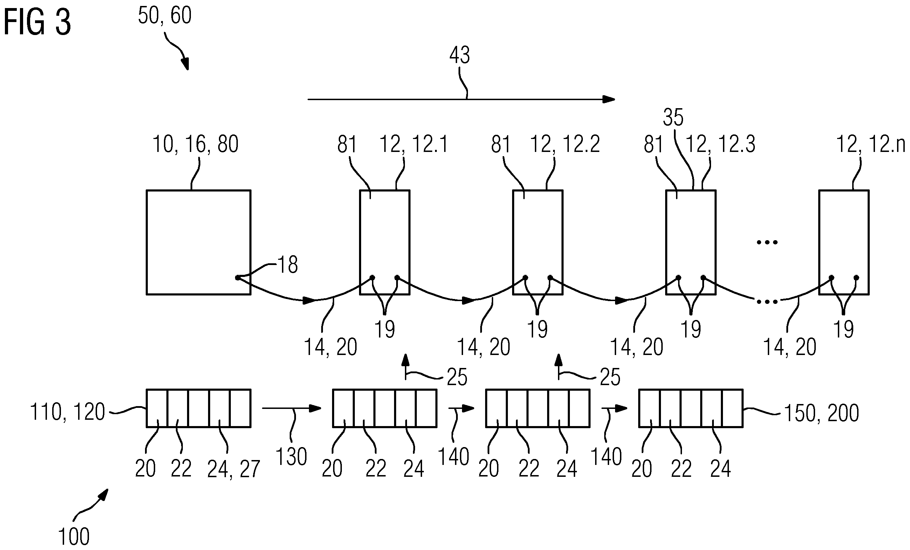

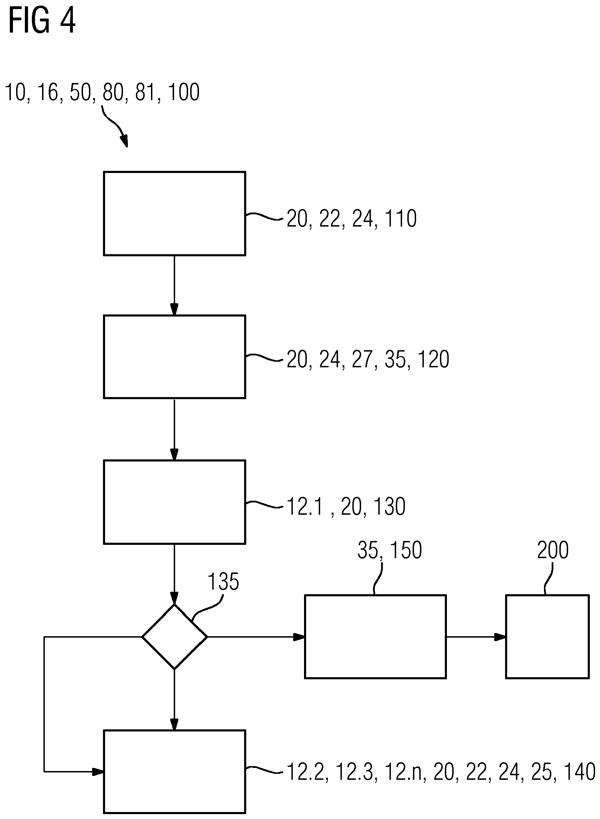

FIG 2 zeigt schematisch den Aufbau eines Befehlssignals 20, das von der Steuereinheit 16 des Hauptmoduls 10 aus FIG 1 erzeugt und gesendet wird. Das Befehlssignal 20 umfasst eine Mehrzahl an Datenzellen 26, in denen von der Steuereinheit 16 und/oder einem Befehls- und Meldegerät 12 Daten geschrieben werden können. Die Datenzellen 26 definieren durch ihre Reihenfolge innerhalb des Befehlssignals 20 dessen Format. Ferner dienen bestimmte Datenzellen 26 zum Transport von Parametern 28 an ein bestimmungsgemäßes Befehls- und Meldegerät 12. Eine der Datenzellen 26 ist als Zielzelle 22 ausgebildet. Der Wert in der Zielzelle 22 wird durch die Steuereinheit 16 des Hauptmoduls 10 bei der Erzeugung des jeweiligen Befehlssignals 20 festgelegt. Der Wert in der Zielzelle 22 ist während des erfindungsgemäßen Verfahrens 100, das exemplarisch in FIG 3 und FIG 4 näher dargestellt wird, unveränderlich. Der Wert in der Zielzelle 22 ist derart ausgebildet, dass er mit einer Kettenposition eines Zielgeräts 35 in einer Linientopologie korrespondiert. Das Zielgerät 35 stellt dabei das Befehls- und Meldegerät 12 dar, dem das Befehlssignal 20 zuzustellen ist. Das Befehlssignal 20 umfasst auch eine Zählzelle 24, die bei der Erzeugung des Befehlssignals 20 mit einem Initialwert 27 beschrieben wird. Der Wert in der Zählzelle 26 ist während des erfindungsgemäßen Verfahrens 100 durch eine Addition eines Inkrements 25 veränderbar. Das Inkrementieren der Zählzelle 26 erfolgt hierbei durch ein Befehls- und Meldegerät 12.

Eine Ausführungsform des erfindungsgemäßen Verfahrens 100 zum Versenden eines Befehlssignals 20 von einem Hauptmodul 10 zu einem bestimmten Befehls- und Meldegerät 12, 12.1, 12.2, 12.3, 12.n wird exemplarisch in FIG 3 gezeigt. Der Aufbau aus FIG 3 entspricht im Wesentlichen dem aus FIG 1. Gleiche Bezugszeichen haben dabei die gleiche technische Bedeutung. Das Befehls- und Meldegerät 12.3, dem das Befehlssignal 20 zuzustellen ist, bildet das Zielgerät 35. Die Befehls- und Meldegeräte 12, 12.1, 12.2, 12.3, 12.n und das Hauptmodul 10 wirken zusammen als Befehls- und Meldesystem 50, das zu einem Automatisierungssystem 60 gehört. Im Verfahren 100 wird in einem ersten Verfahrensschritt 110 durch die Steuereinheit 16 vom Hauptmodul 10 ein Befehlssignal 20 bereitgestellt, das dem Zielgerät 35 zuzustellen ist. Das Befehlssignal 20 ist durch das Hauptmodul 10, also dessen Steuereinheit 16 erzeugbar und/oder wird von einer nicht näher abgebildeten übergeordneten Steuereinheit 11 zum Hauptmodul 10 gesendet. Die Kettenposition des Zielgeräts 35 wird in einem zweiten Verfahrensschritt 120 in einer Zielzelle 22 des Befehlssignals 20 gespeichert. Das im ersten Schritt 110 erzeugt Befehlssignal 20 umfasst auch eine Zählzelle 24, in die beim zweiten Verfahrensschritt 120 von der Steuereinheit 16 ein Initialwert 27 geschrieben wird.

In einem anschließenden dritten Verfahrensschritt 130 wird das Befehlssignal 20 mittels einer Geräteschnittstelle 18 ausgegeben. Das Befehlssignal 20 erreicht über eine Geräteleitung 14 ein erstes Befehls- und Meldegerät 12.1, das unmittelbar mit dem Hauptmodul 10 verbunden ist. Die Geräteleitung 14 wird an einem Linienanschluss 19 angeschlossen. Im ersten Befehls- und Meldegerät 12.1 erfolgt eine Auswertung des Befehlssignals 20. Es wird erfasst, ob der Wert in der Zielzelle 22 mit dem Wert in der Zählzelle 24 übereinstimmt, also ob das erste Befehls- und Meldegerät 12.1 das Zielgerät 35 ist. Im Verfahrensablauf gemäß FIG 3 ist dies nicht der Fall. In einem vierten Verfahrensschritt 140 wird der Wert in der Zählzelle 24 um ein Inkrement 25 erhöht. Im vierten Verfahrensschritt 140 wird das Befehlssignal 20 über die entsprechende Geräteleitung 14 entlang einer Transportrichtung 43 an das zweite Befehls- und Meldegerät 12.2 weitergesendet.

Im zweiten Befehls- und Meldegerät 12.2 wird auch geprüft, ob der Wert in der Zählzelle 24 dem Wert in der Zielzelle 22 entspricht. Der vierte Verfahrensschritt 140 mit der Erhöhung des Werts in der Zählzelle 24 um das Inkrement 25 wird wiederholt und das Befehlssignal 20 weiter entlang der Transportrichtung 43 gesendet.

Im dritten Befehls- und Meldegerät 12.3 wird erkannt, dass dieses das Zielgerät 25 ist. Dies wird erkannt, indem erfasst wird, dass der Wert in der Zählzelle 24 mit dem Wert in der Zielzelle 22 übereinstimmt. Hierdurch wird eine gerätespezifische Zustellung des Befehlssignals 20 an das Zielgerät 35 erzielt. Dabei sind die Befehls- und Meldegeräte 12, 12.1, 12.2, 12.3, 12.n frei von Adressen, die in diesen gespeichert sind. Hierdurch wird eine aufseiten der Befehls- und Meldegeräte 12, 12.1, 12.2, 12.3, 12.n adressfreie Zustellung gewährleistet, was zu einer Vereinfachung und Reduktion der Anforderungen in puncto Rechenleistung führt. Im dritten Befehls- und Meldegerät 12.3, das als Zielgerät 35 dient, erfolgt darauf ein fünfter Verfahrensschritt 150, in dem das Befehlssignal 20 empfangen und umgesetzt wird. Damit ist das erfindungsgemäße Verfahren 100 abgeschlossen und es tritt ein Endzustand 200 ein. In der Steuereinheit 16 des Hauptmoduls 10 ist ein Computerprogrammprodukt 80 ausführbar gespeichert, das dazu ausgebildet ist, das entsprechende Verfahren 100 im Hauptmodul 10 umsetzt. Ferner sind die Befehls- und Meldegeräte 12 mit einem Teilprogramm 81 ausgestattet, das die Verfahrensschritte 140, 150 in den einzelnen Befehls- und Meldegeräten 12, 12., 12.2, 12.3, 12.n umsetzt und so mit dem Computerprogrammprodukt 80 im Hauptmodul 10 zusammenwirkt.

Das Verfahren 100 aus FIG 3 ist exemplarisch. Die Beschreibung auf Basis von FIG 3 gilt ohne Beschränkung der Allgemeinheit für jedes andere Befehls- und Meldegerät 12, 12.1, 12.2, 12.n als Zielgerät 35 in einer Linientopologie mit n Befehls- und Meldegeräten 12.

FIG 4 zeigt schematisch einen Ablauf einer Ausführungsform des erfindungsgemäßen Verfahrens 100, das durch ein Computerprogrammprodukt 80 in einer Steuereinheit 16 in einem Hauptmodul 10 eines Befehls- und Meldesystems 50 umgesetzt wird. In einem ersten Verfahrensschritt 110 wird ein Befehlssignal 20 erzeugt, das eine Zielzelle 22 und eine Zählzelle 24 umfasst. Das Befehlssignal 20 wird von der Steuereinheit 16 des Hauptmoduls 10 erzeugt.

In einem zweiten Verfahrensschritt 120 wird der Wert der Zählzelle 22 durch die Steuereinheit 16 mit einem Initialwert 27 beschrieben. Ferner wird im zweiten Verfahrensschritt 120 das Zielgerät 35 bestimmt und die Zielzelle 22 entsprechend beschrieben. In einem anschließenden dritten Verfahrensschritt 130 wird das Befehlssignal 20 vom Hauptmodul 10 zum unmittelbar verbundenen ersten Befehls- und Meldegerät 12.1 gesendet. Es schließt sich eine Verzweigung 135 an, in der geprüft wird, ob das erste Befehls- und Meldegerät 12.1, das das Befehlssignal 20 unmittelbar nach dem dritten Schritt 130 empfängt, das Zielgerät 35 ist. Die erfolgt durch einen Vergleich zwischen den Werten in der Zielzelle 22 und der Zählzelle 24. Wenn der Wert der Zählzelle 24 vom Wert in der Zielzelle 22 abweicht, folgt der vierte Verfahrensschritt 140. Im vierten Verfahrensschritt 140 wird der Wert der Zählzelle 24 um ein Inkrement 25 erhöht. Das Befehlssignal 20 wird mit gleichbleibendem Wert in der Zielzelle 22 und der geänderten Zählzelle 24 weitergesendet an ein benachbartes Befehls- und Meldegerät 12.2. Dieser Ablauf, also die Durchführung des vierten Schritts 140 und die Entscheidung an der Verzweigung 135 werden je nach Bedarf wiederholt und das Befehlssignal 20 an weitere Befehls- und Meldegeräte 12.3, 12.n weitergereicht und die Zählzelle 24 inkrementiert.

Wenn in der Verzweigung 135 erkannt wird, dass der Wert in der Zählzelle 24 mit dem Wert in der Zielzelle 22 übereinstimmt, folgt der fünfte Verfahrensschritt 150. Darin wird das Befehlssignal 20 empfangen und vom Zielgerät 35, also einem der Befehls- und Meldegeräte 12 in einer Linientopologie, verarbeitet. Danach tritt der Endzustand 200 ein, in dem das Befehls- und Meldesystem 50 für eine neue Durchführung des Verfahrens 100 bereitsteht.

## Patentansprüche

1. Hauptmodul (10) für ein Befehl- und Meldesystem (50), umfassend eine Steuereinheit (16), eine Geräteschnittstelle (18) zum Koppeln mit mindestens zwei Befehls- und Meldegeräten (12, 12.1, 12.2, 12.3, 12.n) in einer Linientopologie, eine Bus-Schnittstelle (13) zur Verbindung mit einer übergeordneten Steuereinheit (11), wobei die Steuereinheit (16) mit der Geräteschnittstelle (18) dazu ausgebildet ist, die mindestens zwei Befehls- und Meldegeräte (12, 12.1, 12.2, 12.3, 12.n) jeweils separat mittels eines Befehlssignals (20) anzusteuern, **dadurch gekennzeichnet, dass** das Befehlssignal (20) zu einer geräteadressenfreien Zustellung am jeweiligen Befehls- und Meldegerät (12, 12.1, 12.2, 12.3, 12.n) eine Zielzelle (22) und eine inkrementierbare Zählzelle (24) aufweist wobei der Wert in der Zielzelle (22) das Befehls- und Meldegerät (12, 12.1, 12.2, 12.3, 12.n) definiert, für das das Befehlssignal (20) bestimmt ist, und wobei die Zählzelle (24) beim Absenden des Befehlssignals (20) von der Geräteschnittstelle (18) mit einem Initialwert gefüllt ist, der beim Empfangen des Befehlssignals (20) durch ein Befehls- und Meldegerät (12, 12.1, 12.2, 12.3, 12.n) jeweils um ein Inkrement erhöht wird, sodass das Befehlssignal ausgehend vom Hauptmodul von einem Befehls- und Meldegerät an das nächste weitergereicht wird, bis das Befehlssignal vom bestimmungsgemäßen Befehls- und Meldegerät (12, 12.1, 12.2, 12.3, 12.n) identifiziert und verarbeitet wird.

2. Hauptmodul (10) nach Anspruch 1, **dadurch gekennzeichnet, dass** die Geräteschnittstelle (18) als serielle Schnittstelle ausgebildet ist, und/oder dazu ausgebildet ist, Daten von mindestens einem Befehls- und Meldegerät (12, 12.1, 12.2, 12.3, 12.n) an das Hauptmodul (10) zu übertragen.

3. Hauptmodul (10) nach Anspruch 1 oder 2, **dadurch gekennzeichnet, dass** das Hauptmodul (10) mindestens einen durch einen Benutzer konfigurierbaren Digitaleingang (30) und/oder mindestens einen durch den Benutzer konfigurierbaren Analogeingang (32) aufweist.

4. Hauptmodul (10) nach einem der Ansprüche 1 bis 3, **dadurch gekennzeichnet, dass** das Hauptmodul (10) mindestens einen durch den Benutzer konfigurierbaren Digitalausgang (34) und/oder mindestens einen durch den Benutzer konfigurierbaren Analogausgang (36) aufweist.

5. Hauptmodul (10) nach einem der Ansprüche 1 bis 4, **dadurch gekennzeichnet, dass** das Hauptmodul (10) mindestens einen Sicherheits-Signaleingang (38) für ein sicherheitsgerichtetes Gerät (40), insbesondere einen Not-Aus, aufweist.

6. Hauptmodul (10) nach einem der Ansprüche 1 bis 5, **dadurch gekennzeichnet, dass** das Befehlssignal (20) dazu ausgebildet ist, einen Parameter separat an mindestens eines der Befehls- und Meldegeräte (12, 12.1, 12.2, 12.3, 12.n) zu transportieren.

7. Hauptmodul (10) nach einem der Ansprüche 1 bis 6, **dadurch gekennzeichnet, dass** die Steuereinheit (16) einen Anschluss (42) für ein wechselbares Speichermodul (45) aufweist, der zur Übertragung von mindestens einem Parameter (28) für das sicherheitsgerichtete Gerät (40) ausgebildet ist.

8. Verfahren (100) zum Versenden eines Befehlssignals (20) von einem Hauptmodul (10) an ein einzelnes Zielgerät (35) aus einer Mehrzahl an Befehls- und Meldegeräten (12, 12.1, 12.2, 12.3, 12.n), die in einer Linientopologie mit dem Hauptmodul (10) verbunden sind, umfassend die Schritte:
a) Erzeugen eines Befehlssignals (20), das eine Zielzelle (22) und eine Zählzelle (24) umfasst,
b) Einstellen eines Werts für die Zielzelle (22), der mit dem Zielgerät (35) korrespondiert und Einstellen eines Initialwerts für die Zählzelle (24),
c) Senden des Befehlssignals (20) an ein unmittelbar mit dem Hauptmodul (10) verbundenes Befehls- und Meldegerät (12, 12.1, 12.2, 12.3, 12.n),
d) Weitersenden des Befehlssignals (20) an ein weiteres Befehls- und Meldegerät (12, 12.1, 12.2, 12.3, 12.n) und Erhöhen des Werts der Zählzelle (24) um ein Inkrement (25), wenn beim Empfangen des Befehlssignals (20) der Wert der Zählzelle (24) vom Wert der Zielzelle (22) abweicht,
e) Empfangen und Verarbeiten des Befehlssignals durch das Zielgerät (35), wenn beim Empfangen des Befehlssignals (20) der Wert der Zählzelle (24) dem Wert der Zielzelle (22) entspricht.

9. Computerprogrammprodukt (80) zur Speicherung und Ausführung in einer Steuereinheit (16) eines Hauptmoduls (10), das mit einer Mehrzahl an Befehls- und Meldegeräten (12, 12.1, 12.2, 12.3, 12.n) in einer Linientopologie verbunden ist, **dadurch gekennzeichnet, dass** das Computerprogrammprodukt (80) zur Durchführung des Verfahrens (100) nach Anspruch 8 ausgebildet ist.

10. Befehls- und Meldesystem (50), umfassend eine Mehrzahl an Befehls- und Meldegeräten (12, 12.1, 12.2, 12.3, 12.n), die in einer Linientopologie miteinander verbunden sind, und ein Hauptmodul (10) nach einem der Ansprüche 1 bis 7, das mit einem der Befehls- und Meldegeräte (12, 12.1, 12.2, 12.3, 12.n) über eine Geräteschnittstelle (18) gekoppelt ist, wobei die Befehls- und Meldegeräte (12, 12.1, 12.2, 12.3, 12.n) dazu ausgebildet sind, beim Empfangen des Befehlssignals (20) die Werte der Zielzelle (22) und der Zählzelle (24) auszulesen und zu vergleichen, und a) wenn die Werte in der Zielzelle (22) und der Zählzelle (24) voneinander abweichen, den Wert der Zählzelle (24) um ein Inkrement zu erhöhen und das Befehlssignal (20) an ein weiteres Befehls- und Meldegerät (12, 12.1, 12.2, 12.3, 12.n) weiterzusenden, und b) wenn die Werte in der Zielzelle (22) und der Zählzelle (24) übereinstimmen, das Befehlssignal (20) zu empfangen und zu verarbeiten.

11. Automatisierungssystem (60), umfassend eine übergeordnete Steuereinheit (11), die mit einem Befehls- und Meldesystem (50) gekoppelt ist, das eine Mehrzahl an Befehls- und Meldegeräten (12, 12.1, 12.2, 12.3, 12.n) und ein Hauptmodul (10) umfasst, **dadurch gekennzeichnet, dass** das Befehls- und Meldesystem (70) nach Anspruch 10 ausgebildet ist.

## Claims

1. Main module (10) for a command and reporting system (50), comprising a control unit (16), a device interface (18) for coupling to at least two command and reporting devices (12, 12.1, 12.2, 12.3, 12.n) in a line topology, a bus interface (13) for connecting to a higher-level control unit (11), wherein the control unit (16) is designed with the device interface (18) to control the at least two command and reporting devices (12, 12.1, 12.2, 12.3, 12.n) separately by means of a command signal (20), **characterised in that** the command signal (20) has a target cell (22) and an incrementable counting cell (24) for device-address-free delivery at the respective command and reporting device (12, 12.1, 12.2, 12.3, 12.n) wherein the value in the target cell (22) defines the command and reporting device (12, 12.1, 12.2, 12.3, 12.n), for which the command signal (20) is intended, and wherein the counting cell (24) is filled with an initial value when the command signal (20) is sent from the device interface (18), which upon receipt of the command signal (20) by a command and reporting device (12, 12.1, 12.2, 12.3, 12.n) is increased by one increment in each case, so that the command signal originating from the main module is forwarded from one command and reporting device to the next until the command signal (12, 12.1, 12.2, 12.3, 12.n) is identified and processed by the intended command and reporting device (12, 12.1, 12.2, 12.3, 12.n).

2. Main module (10) according to claim 1, **characterised in that** the device interface (18) is designed as a serial interface, and/or is designed to transmit data from at least one command and reporting device (12, 12.1, 12.2, 12.3, 12.n) to the main module (10).

3. Main module (10) according to claim 1 or 2, **characterised in that** the main module (10) has at least one digital input (30) configurable by a user and/or at least one analogue input (32) configurable by the user.

4. Main module (10) according to one of claims 1 to 3, **characterised in that** the main module (10) has at least one digital output (34) configurable by the user and/or at least one analogue output (36) configurable by the user.

5. Main module (10) according to one of claims 1 to 4, **characterised in that** the main module (10) has at least one safety signal input (38) for a safety-oriented device (40), in particular an emergency stop.

6. Main module (10) according to one of claims 1 to 5, **characterised in that** the command signal (20) is designed to transport a parameter separately to at least one of the command and reporting devices (12, 12.1, 12.2, 12.3, 12.n).

7. Main module (10) according to one of claims 1 to 6, **characterised in that** the control unit (16) has a connection (42) for an exchangeable storage module (45) which is designed to transmit at least one parameter (28) for the safety-oriented device (40).

8. Method (100) for sending a command signal (20) from a main module (10) to an individual target device (35) from a plurality of command and reporting devices (12, 12.1, 12.2, 12.3, 12.n) which are connected to the main module (10) in a line topology, comprising the steps:
a) Generation of a command signal (20) comprising a target cell (22) and a counting cell (24),
b) Setting of a value for the target cell (22) corresponding to the target device (35) and setting of an initial value for the counting cell (24),
c) Transmission of the command signal (20) to a command and reporting device (12, 12.1, 12.2, 12.3, 12.n) directly connected to the main module (10),
d) Forwarding of the command signal (20) to a further command and reporting device (12, 12.1, 12.2, 12.3, 12.n) and increasing of the value of the counting cell (24) by one increment (25) when, while receiving the command signal (20), the value of the counting cell (24) differs from the value of the target cell (22),
e) Receiving and processing of the command signal by the target device (35) when, while receiving the command signal (20), the value of the counting cell (24) corresponds to the value of the target cell (22).

9. Computer program product (80) for storage and execution in a control unit (16) of a main module (10) which is connected to a plurality of command and reporting devices (12, 12.1, 12.2, 12.3, 12.n) in a line topology, **characterised in that** the computer program product (80) is designed to execute the method (100) according to claim 8.

10. Command and reporting system (50), comprising a plurality of command and reporting devices (12, 12.1, 12.2, 12.3, 12.n), which are connected to each other in a line topology, and a main module (10) according to one of claims 1 to 7, which is coupled to one of the command and reporting devices (12, 12.1, 12.2, 12.3, 12.n) by means of a device interface (18), wherein the command and reporting devices (12, 12.1, 12.2, 12.3, 12.n) are designed to read out and compare the values of the target cell (22) and the counting cell (24) on receiving the command signal (20), and a) if the values in the target cell (22) and the counting cell (24) differ from one another to increase by one increment, the value of the target cell (24) and to forward the command signal (20) to a further command and reporting device (12, 12.1, 12.2, 12.3, 12.n) and b) if the values in the target cell (22) match the counting cell (24), to receive and process the command signal (20).

11. Automation system (60), comprising a higher-level control unit (11), which is coupled to a command and reporting system (50) comprising a plurality of command and reporting devices (12, 12.1, 12.2, 12.3, 12.n) and a main module (10), **characterised in that** the command and reporting system (70) is designed according to claim 10.

## Revendications

1. Module principal (10) pour un système de commande et de signalisation (50), comprenant une unité de commande (16), une interface d'appareil (18) pour le couplage avec au moins deux appareils de commande et de signalisation (12, 12.1, 12.2, 12.3, 12.n) dans une topologie en ligne, une interface de bus (13) pour la liaison avec une unité de commande supérieure (11), dans lequel l'unité de commande (16) avec l'interface d'appareil (18) est conçue pour contrôler les au moins deux appareils de commande et de signalisation (12, 12.1, 12.2, 12.3, 12.n) chacun séparément au moyen d'un signal de commande (20), **caractérisé en ce que** le signal de commande (20) comprend, pour une notification sans adresse d'appareil sur l'appareil de commande et de signalisation (12, 12.1, 12.2, 12.3, 12.n) correspondant, une cellule cible (22) et une cellule de comptage incrémentale (24), dans lequel la valeur dans la cellule cible (22) définit l'appareil de commande et de signalisation (12, 12.1, 12.2, 12.3, 12.n) auquel le signal de commande (20) est destiné et dans lequel la cellule de comptage (24) est remplie, lors de l'envoi du signal de commande (20) par l'interface d'appareil (18), avec une valeur initiale qui est augmentée d'un incrément lors de la réception du signal de commande (20) par un appareil de commande et de signalisation (12, 12.1, 12.2, 12.3, 12.n), de façon à ce que le signal de commande soit transmis, à partir du module principal, d'un appareil de commande et de signalisation vers le suivant, jusqu'à ce que le signal de commande soit identifié et traité par l'appareil de commande et de signalisation (12, 12.1, 12.2, 12.3, 12.n) approprié.

2. Module principal (10) selon la revendication 1, **caractérisé en ce que** l'interface d'appareil (18) est conçue comme une interface série et/ou est conçue pour transmettre des données d'au moins un appareil de commande et de signalisation (12, 12.1, 12.2, 12.3, 12.n) au module principal (10) .

3. Module principal (10) selon la revendication 1 ou 2, **caractérisé en ce que** le module principal (10) comprend au moins une entrée numérique (30) configurable par un utilisateur et/ou au moins une entrée analogique (32) configurable par l'utilisateur.

4. Module principal (10) selon l'une des revendications 1 à 3, **caractérisé en ce que** le module principal (10) comprend au moins une sortie numérique (34) configurable par l'utilisateur et/ou au moins une sortie analogique (36) configurable par l'utilisateur.

5. Module principal (10) selon l'une des revendications 1 à 4, **caractérisé en ce que** le module principal (10) comprend au moins une entrée de signal de sécurité (38) pour un appareil sécurisé (40), plus particulièrement un arrêt d'urgence.

6. Module principal (10) selon l'une des revendications 1 à 5, **caractérisé en ce que** le signal de commande (20) est conçu pour transporter un paramètre séparément au niveau d'au moins un des appareils de commande et de signalisation (12, 12.1, 12.2, 12.3, 12.n).

7. Module principal (10) selon l'une des revendications 1 à 6, **caractérisé en ce que** l'unité de commande (16) comprend un raccord (42) pour un module de mémoire interchangeable (45) qui est conçu pour la transmission d'au moins un paramètre (28) pour l'appareil sécurisé (40).

8. Procédé (100) pour l'envoi d'un signal de commande (20) d'un module principal (10) à un seul appareil cible (35) à partir d'une pluralité d'appareils de commande et de signalisation (12, 12.1, 12.2, 12.3, 12.n) qui sont reliés dans une topologie en ligne avec le module principal (10), comprenant les étapes suivantes :
a) génération d'un signal de commande (20) qui comprend une cellule cible (22) et une cellule de comptage (24),
b) réglage d'une valeur pour la cellule cible (22), qui correspond à l'appareil cible (35) et réglage d'une valeur initiale pour la cellule de comptage (24),
c) envoi du signal de commande (20) à un appareil de commande et de signalisation (12, 12.1, 12.2, 12.3, 12.n) relié avec le module principal (10),
d) transmission du signal de commande (20) à un autre appareil de commande et de signalisation (12, 12.1, 12.2, 12.3, 12.n) et augmentation de la valeur de la cellule de comptage (24) d'un incrément (25) lorsque, lors de la réception du signal de commande (20), la valeur de la cellule de comptage (24) diffère de la valeur de la cellule cible (22),
e) réception et traitement du signal de commande par l'appareil cible (35) lorsque, lors de la réception du signal de commande (20), la valeur de la cellule de comptage (24) correspond à la valeur de la cellule cible (22) .

9. Produit de programme informatique (80) destiné à être enregistré et exécuté dans une unité de commande (16) d'un module principal (10), qui est relié avec une pluralité d'appareils de commande et de signalisation (12, 12.1, 12.2, 12.3, 12.n) dans une topologie en ligne, **caractérisé en ce que** le produit de programme informatique (80) est conçu pour l'exécution du procédé (100) selon la revendication 8.

10. Système de commande et de signalisation (50), comprenant une pluralité d'appareils de commande et de signalisation (12, 12.1, 12.2, 12.3, 12.n) qui sont reliés entre eux dans une topologie en ligne, et un module principal (10) selon l'une des revendications 1 à 7, qui est couplé avec un des appareils de commande et de signalisation (12, 12.1, 12.2, 12.3, 12.n) par l'intermédiaire d'une interface d'appareil (18), dans lequel les appareils de commande et de signalisation (12, 12.1, 12.2, 12.3, 12.n) sont conçus pour lire et comparer, lors de la réception du signal de commande (20), les valeurs de la cellule cible (22) et de la cellule de comptage (24) et a) lorsque les valeurs dans la cellule cible (22) et dans la cellule de comptage (24) sont différentes l'une de l'autre, pour augmenter la valeur de la cellule de comptage (24) d'un incrément et pour transmettre le signal de commande (20) à un autre appareil de commande et de signalisation (12, 12.1, 12.2, 12.3, 12.n), et b) lorsque les valeurs dans la cellule cible (22) et dans la cellule de comptage (24) coïncident, pour recevoir et traiter le signal de commande (20).

11. Système d'automatisation (60), comprenant une unité de commande supérieure (11), qui est couplée avec un système de commande et de signalisation (50), qui comprend une pluralité d'appareils de commande et de signalisation (12, 12.1, 12.2, 12.3, 12.n) et un module principal (10), **caractérisé en ce que** le système de commande et de signalisation (70) est conçu selon la revendication 10.
